# EUROPEAN PATENT APPLICATION

(11) **EP 4 578 837 A1**
(43) Date of publication of application: **02.07.2025**
(21) Application number: 24223362.5
(22) Date of filing: 27.12.2024
(51) Int. Cl.: C03B 23/03, C03B 40/00

(54) **METHOD FOR PRODUCING GLASS MOLDED ARTICLE AND METHOD FOR PRODUCING FLATTENED MOLD CLOTH**

(30) Priority: 28.12.2023 JP 2023223474
(71) Applicant: AGC Inc., Chiyoda-ku Tokyo 100-8405 (JP)
(72) Inventor: OTA, Shinya, Chiyoda-ku Tokyo, 100-8405 (JP); ASANO, Kenya, Chiyoda-ku Tokyo, 100-8405 (JP)
(74) Representative: TBK

(57) **Abstract**

The present invention relates to a method for producing a glass molded article, the method including: attaching a flattened mold cloth, which is obtained by reducing irregularities on a surface of a mold cloth, to a forming mold; heating a glass plate to a temperature equal to or higher than a glass transition point; and press-forming the softened glass plate into a predetermined shape along the forming mold via the flattened mold cloth.

## Description

### TECHNICAL FIELD

The present invention relates to a method for producing a glass molded article and a method for producing a flattened mold cloth, and more particularly to a method for producing a glass molded article having a curved shape obtained by subjecting a glass plate to bending processing, and a method for producing a flattened mold cloth for use in production of the glass molded article.

### BACKGROUND ART

In recent years, a window glass for automobiles or a window glass for buildings has a curvature in order to improve an aesthetic appearance and daylighting efficiency. A glass having a curved shape (curved glass) is produced, for example, by heating a glass plate in a heating furnace to a temperature equal to or higher than a glass transition point, and pressing the glass plate in a mold having a predetermined shape.

Regarding a method for press bending and forming a glass plate, for example, Patent Literatures 1 and 2 propose a forming device for bending and forming a glass plate by sandwiching the glass plate between a female mold and a male mold and press-forming the glass plate.

In the bending and forming device, a curved glass is generally formed through the following steps (1) to (3). (1) A glass plate is heated to a temperature equal to or higher than a glass transition point while being transported, and then placed on the female mold by a transfer machine including a positioning mechanism. (2) At a pressing position, the glass plate is pressed by an upper male mold and a lower female mold to form a predetermined curved shape. At this time, vacuum suction is also performed on the male mold side. (3) After completion of pressing, the glass plate is taken out while still being held by suction on the male mold, and then cooled. With the forming device, since the glass plate can be formed into a shape that follows a forming surface of the male mold, by using a mold having a forming surface with a desired shape, it is possible to form a curved glass having the desired shape.
Patent Literature 1: JP2018-513094A
Patent Literature 2: JP2020-521715A

### SUMMARY OF INVENTION

In the bending and forming device, in order to prevent the glass plate held by suction on the male mold from remaining stuck to by the male mold and becoming difficult to release even after the vacuum state is released, the surface of the male mold is covered with a protective material called a mold cloth. The mold cloth used is generally a knitted fabric obtained by knitting yarns (spun threads) made of a fire-resistant fiber, and therefore has fine irregularities on the surface. When the glass plate is pressed on the mold cloth, the irregularities on the surface of the mold cloth may be transferred to the surface of the glass plate. Accordingly, fine irregularities are generated on the surface of the glass plate, and depending on the viewing angle, a phenomenon called undulation (perspective distortion) may occur, where the surface of the glass plate appears wavy or an object appears distorted.

An example of a glass molded article having a curved surface is a windshield of an automobile. A laminated glass is used for the windshield, but when surfaces of glass plates have irregularities and the glass plates are joined together, gaps are formed between the glasses, making the undulation phenomenon more noticeable. It is desirable for a windshield to be free of perspective distortion that would impair the visibility of a driver, and therefore it is desirable to reduce the perspective distortion in the laminated glass.

In order to reduce such perspective distortion, in the related art, measures have been taken during the production of a curved glass, such as lowering a heating temperature for the glass plate, lowering a vacuum pressure, shortening a vacuum time, and shortening a pressing time. However, when these measures are conducted, it is difficult to bend the glass plate into a desired shape, which causes a problem that it is difficult to produce a glass molded article having a complex shape.

Therefore, an object of the present invention is to reduce perspective distortion of a glass molded article obtained by subjecting a glass plate to a bending processing.

The inventors of the present invention have found that the higher the heating temperature for the glass plate, the easier it is for the irregularities on the surface of the mold cloth to be transferred to the glass surface. Then, as a result of intensive studies, the inventors of the present invention have found, based on this finding, that when the roughness of the surface of the mold cloth used is recued, it is possible to bend the glass plate into a desired shape while reducing perspective distortion without adjusting processing conditions. Thus, the present invention has been completed.

An aspect of the present invention relates to a method for producing a glass molded article, the method including: attaching a flattened mold cloth, which is obtained by reducing irregularities on a surface of a mold cloth, to a forming mold; heating a glass plate to a temperature equal to or higher than a glass transition point; and press-forming the softened glass plate into a predetermined shape along the forming mold via the flattened mold cloth.

Another aspect of the present invention relates to a method for producing a flattened mold cloth, the method including: applying a pressure of 0.3 MPa or more to a surface of a mold cloth to reduce irregularities on a surface of the mold cloth.

With the method for producing a glass molded article according to the present invention, a glass molded article having reduced perspective distortion can be obtained. The obtained glass molded article has little perspective distortion and has an excellent appearance, and is therefore suitable for use as a laminated glass. In addition, with the method for producing a glass molded article according to the present invention, since the glass plate has little perspective distortion even when the heating temperature is increased, more complex forming can be achieved by increasing the heating temperature for the glass plate, and since stress relaxation is facilitated, cracks can be prevented.

With the method for producing a flattened mold cloth according to the present invention, since a mold cloth with reduced irregularities on the surface can be obtained, by using this mold cloth to produce a glass molded article, a glass molded article having reduced perspective distortion can be obtained.

### BRIEF DESCRIPTION OF DRAWINGS

FIG. 1 is a configuration diagram illustrating an example of a production device used for producing a glass molded article.
FIGS. 2A to 2D are diagrams illustrating an example of an operation procedure of the production device in FIG. 1.
FIG. 3 is an external view of a vacuum mold used to closely attach a vinyl sheet to a mold cloth.
FIG. 4 is a diagram showing test results in Example 1 and Example 2.
FIG. 5 is a diagram showing test results in Example 3 and Example 4.
FIG. 6 is a diagram showing test results in Example 5 and Example 6.
FIG. 7 is a diagram showing test results in Example 7 and Example 8.

### DESCRIPTION OF EMBODIMENTS

Hereinafter, the present invention will be described, and the present invention is not limited by examples in the following description. Note that, in the present description, an expression "to" used to express a numerical range includes numerical values before and after it as a lower limit value and an upper limit value of the range, respectively.

### <Method for Producing Glass Molded Article>

A method for producing a glass molded article according to the present invention includes: attaching a flattened mold cloth, which is obtained by reducing irregularities (roughness) on a surface of a mold cloth, to a forming mold; heating a glass plate to a temperature equal to or higher than a glass transition point; and press-forming the softened glass plate into a predetermined shape along the forming mold via the flattened mold cloth.

The present invention has been made with a focus on a mold cloth used in forming a glass plate by using a mold, and is characterized in that a glass plate is bent and formed along a forming mold via a flattened mold cloth having reduced irregularities (roughness) on the surface of the mold cloth. Accordingly, the irregularities caused by the mold cloth transferred to the glass surface is reduced, thereby reducing the perspective distortion of the glass. In particular, the occurrence of the perspective distortion, which tends to be noticeable in a laminated glass, can be prevented. In addition, by using a flattened mold cloth, it is no longer necessary to adjust processing conditions in order to reduce the perspective distortion in producing a curved glass, and therefore the production efficiency can be improved.

Hereinafter, an embodiment of the method for producing a glass molded article (curved glass) according to the present invention will be specifically described.

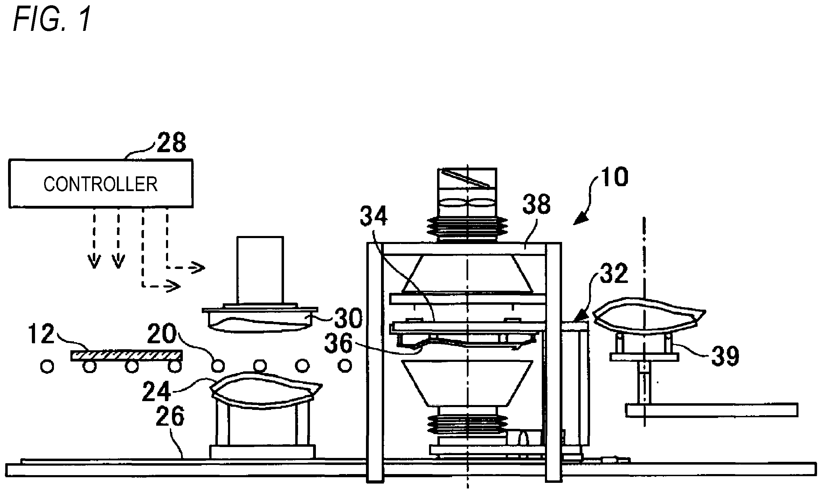

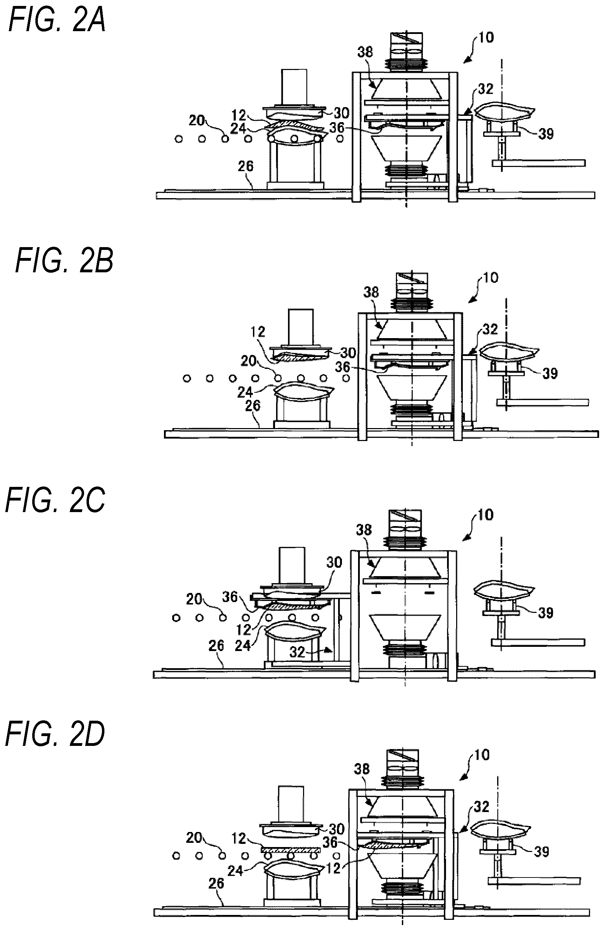

FIG. 1 is a configuration diagram illustrating an example of a production device 10 for use in the method for producing a glass molded article according to the present invention. FIGS. 2A to 2D are diagrams illustrating an example of an operation procedure of the production device 10 in FIG. 1.

As shown in FIG. 1, the production device 10 used for producing a glass molded article includes a controller 28, a transport conveyor 20 for transporting a heated and softened glass plate 12, and a pressing area and a cooling area that are provided from an upstream side to a downstream side in a transporting direction of the glass plate 12. The transport conveyor 20 transports the heated and softened glass plate 12 to the pressing area, where the glass plate 12 is press-formed by a female mold 24 and a male mold 30 included in the pressing area, and then cooled in the cooling area.

The glass plate 12 is made of an inorganic glass. As the inorganic glass, for example, a soda lime glass, an aluminosilicate glass, a borosilicate glass, an alkali-free glass, or a quartz glass can be used without any particular limitation. Among them, a soda lime glass is particularly preferred from the viewpoint of production cost and formability. The method for forming the glass plate 12 is not particularly limited. For example, in the case of an inorganic glass, a glass plate formed by a float method or the like is preferred. The glass plate 12 may be made of a glass that absorbs ultraviolet or infrared rays. The glass plate 12 is preferably transparent, but may be a colored glass plate to the extent that the transparency is not impaired.

The glass plate 12 preferably has a thickness of 0.5 mm or more and 5.0 mm or less, from the viewpoint of weight and perspective distortion. The thickness of the glass plate 12 is more preferably 1.6 mm or more.

In addition, for example, a peripheral edge portion of the glass plate 12 may be coated with a ceramic color paste including a meltable glass frit containing a black pigment.

The means for heating the glass plate 12 is not particularly limited, and may be, for example, heating in a heating furnace. As the heating furnace, it is preferable to use an electric heating furnace since the temperature can be easily adjusted. The heating furnace may be one, or a plurality of furnaces may be used to heat in stages.

The glass plate 12 is heated to a temperature equal to or higher than a glass transition point of the glass plate 12. The glass transition point of the glass plate 12 varies depending on the composition of the glass, and is preferably 600°C to 700°C. The heating temperature can be adjusted by using the controller 28.

In the present embodiment, first, flat glass plates 12 cut into a predetermined shape are transported one by one into a heating furnace by the transport conveyor 20 or the like, then heated to a predetermined bending and forming temperature, and are then carried into the pressing area.

The female mold 24, which is an example of a lower mold for pressing, is provided at a predetermined position in the pressing area.

When the glass plate 12 is transported to the predetermined position in the pressing area, the female mold 24 rises from a standby position below the transport conveyor 20 to a predetermined raised position. Therefore, when transported to the above predetermined position, the glass plate 12 is transferred from the transport conveyor 20 to the female mold 24.

As shown in FIG. 2A, the female mold 24 supports the glass plate 12 from below. In this example, the female mold 24 is a press ring formed in a ring shape along the contour of the glass plate 12 so as to support the peripheral edge portion (an edge surface or the vicinity of the edge surface) of the glass plate 12. Note that, the shape of an upper surface of the female mold 24 may be one that supports the entire periphery of the glass plate 12 or one that supports only a portion of the glass plate 12. In addition, the shape of the upper surface of the female mold 24 can correspond to a curved shape of the glass plate 12 to be bent and formed in the above transporting direction or in a direction perpendicular thereto.

The female mold 24 can be raised and lowered between the standby position below the transport conveyor 20 and a pressing position above the transport conveyor 20. When the glass plate 12 is transferred from the transport conveyor 20 to the predetermined raised position of the female mold 24, the female mold 24 is then raised from the predetermined raised position to the pressing position above the transport conveyor 20 with the glass plate 12 placed thereon.

The male mold 30, which is a forming mold, is included above the transport conveyor 20 in the pressing area, and the glass plate 12 is sandwiched and pressed between the female mold 24 and the male mold 30. The male mold 30 has a lower surface formed in a shape corresponding to the entire surface of the glass plate 12 to be bent and formed. In this example, the male mold 30 is a press mold formed to have a downward convex shape. The shape of the lower surface of the male mold 30 can correspond to a curved shape of the glass plate 12 to be bent and formed in the transporting direction and in the direction perpendicular thereto.

The female mold 24 and the male mold 30 are an example of a pair of molds that constitute a main forming press device for press-forming the glass plate 12. The female mold 24 and the male mold 30 are arranged above and below the transport conveyor 20 with sandwiching the transport conveyer 20, and the shape of the upper surface of the female mold 24 and the shape of the lower surface of the male mold 30 match a predetermined shape of the glass molded article.

The male mold 30 includes a number of air suction holes formed in the lower surface. The glass plate 12 is sucked from the female mold 24 side to the male mold 30 side by air suction through these air suction holes, and is held by suction on the lower surface of the male mold 30. Note that, with this air suction, a high suction pressure is applied such that the glass plate 12 is lifted against the gravity and made to fit to the lower surface of the male mold 30.

In the present embodiment, a mold cloth (not shown) is attached along the lower surface (that is, a surface that comes into contact with the glass plate 12) of the male mold 30. The mold cloth is a protective material for preventing the glass plate 12 from remaining stuck to by the male mold 30 and becoming difficult to release after the air suction by the male mold 30 is released.

The mold cloth is a knitted fabric obtained by knitting yarns (spun threads) made of a fire-resistant fiber. Examples of the fiber for forming the mold cloth include a fiber made of a metal, a ceramic (glass fiber), a heat-resistant resin (such as polyparaphenylene terephthalamide and polybenzoxazole (PBO)), or the like. These may be used alone or in combination of two or more thereof.

Since the mold cloth is woven with yarns, the surface has fine irregularities. Therefore, when the glass plate 12 is heated to a temperature equal to or higher than the glass transition point and press-formed along the male mold 30, the irregularities on the surface of the mold cloth may be transferred to the surface of the glass plate 12. Therefore, in the present embodiment, a flattened mold cloth having reduced irregularities on the surface of the mold cloth is used, as to be described alter.

When the press-forming of the glass plate 12 by the female mold 24 and the male mold 30 is completed, the female mold 24 descends. At this time, as shown in FIG. 2B, the male mold 30 holds the press-formed glass plate 12 by air suction through the air suction holes. In the present embodiment, since suction is performed via the flattened mold cloth, even when the glass plate is held by suction at a high suction pressure as described above, the irregularities transferred to the glass surface is reduced, and the occurrence of the perspective distortion in the glass molded article can be prevented.

Subsequently, the press-formed glass plate 12 is cooled. In the present embodiment, the production device 10 includes a transport shuttle 32 on which the press-formed glass plate 12 is placed, and the press-formed glass plate 12 is transported by the transport shuttle 32 from the pressing area to the cooling area. The transport shuttle 32 includes a cooling mold 36 fixedly attached to a base 34. The cooling mold 36 supports the glass plate 12 from below. In this example, the cooling mold 36 is a female mold ring formed in a ring shape along the contour of the glass plate 12 so as to support the peripheral edge portion (an edge surface or the vicinity of the edge surface) of the glass plate 12. Note that, the shape of an upper surface of the cooling mold 36 may be one that supports the entire periphery of the glass plate 12 or one that supports only a portion of the glass plate 12. In addition, the shape of the upper surface of the cooling mold 36 can correspond to a curved shape of the glass plate 12 to be bent and formed in the above transporting direction and in the direction perpendicular thereto.

The transport shuttle 32 is capable of reciprocating on a rail 26 between the pressing area and the cooling area. After the glass plate 12 is press-formed by the female mold 24 and the male mold 30 and is held by suction on the lower surface of the male mold 30, and the female mold 24 descends to the standby position, the transport shuttle 32 moves to a position directly below the male mold 30 in the pressing area.

When the transport shuttle 32 moves to a position facing the male mold 30 and the suction holding of the glass plate 12 by the air suction of the male mold 30 is released, the glass plate 12 is transferred from the lower surface of the male mold 30 onto the cooling mold 36 of the transport shuttle 32, as shown in FIG. 2C.

When the glass plate 12 is transferred onto the cooling mold 36 of the transport shuttle 32, the transport shuttle 32 moves to the cooling area, and the glass plate 12 is cooled in the cooling area.

In the cooling area, the glass plate 12 is cooled until the temperature is lower than the glass transition point. In the case of preparing an unstrengthened glass for use in a laminated glass, it is preferable to anneal the glass plate. In the case of preparing a strengthened glass, it is preferable to cool the glass plate by blowing cooling air from a cooling device 38 and form a high compressive stress layer on the surface of the glass plate for strengthening.

An example of the cooling device is a blower.

When the glass plate 12 is cooled, the deformation of the glass plate 12 stops. FIG. 2D shows the production device 10 in this state.

The cooled glass plate 12 is separated from the cooling mold 36 by a separating unit and temporarily supported.

Thereafter, the transport shuttle 32 retreats to the pressing area. After the transport shuttle 32 retreats to the pressing area, an carrying-out shuttle 39 enters the cooling area, and the glass plate 12 temporarily supported by the separating unit is transferred onto a mold of the carrying-out shuttle 39. When the glass plate 12 is transferred onto the mold of the carrying-out shuttle 39, the carrying-out shuttle 39 is then moved into an inspection area.

The glass molded article produced by the production method according to the present embodiment preferably has a maximum perspective distortion value MAX of 120 mdpt or less when measured using a distortion inspection device LAB SCAN manufactured by ISRA VISION GmbH under conditions of an attachment angle of 30 degrees with Filter 4.5.0.

More specifically, the maximum perspective distortion value MAX of the glass molded article is measured using "LABSCAN" manufactured by ISRA VISION GmbH by taking an image of the glass molded article under conditions of an attachment angle of 30 degrees with Filter 4.5.0, and measuring the maximum perspective distortion value in the image. Note that, it is preferable to measure the perspective distortion using the distortion inspection device LABSCAN in the state where the glass molded article is stacked.

When the maximum perspective distortion value MAX is 120 mdpt or less, the surface does not appear wavy, and distortion is small even when an object is viewed through the glass. The maximum perspective distortion value MAX is more preferably 110 mdpt or less, still more preferably 100 mdpt or less, and particularly preferably 90 mdpt or less. The smaller the maximum perspective distortion value MAX, the smaller the irregularities on the surface of the glass molded article, which is preferred. Therefore, there is no particular limitation on the lower limit value.

### <Method for Producing Flattened Mold Cloth>

The above flattened mold cloth used in the method for producing a glass molded article according to the present invention is produced by applying a pressure of 0.3 MPa or more to a surface of a mold cloth to reduce irregularities (roughness) on a surface of the mold cloth.

The flattened mold cloth obtained by performing the above production method has small irregularities on the surface of the mold cloth, and therefore when a glass plate is bent and formed using the flattened mold cloth, a glass molded article having reduced perspective distortion is obtained.

The mold cloth used in the present embodiment may be a commercially available mold cloth, a used mold cloth that has been used several times, or a mold cloth prepared by a knitting machine. The mold cloth can be made of the materials described above.

In the present embodiment, a pressure of 0.3 MPa or more is applied to the surface of the mold cloth. When a pressure of 0.3 MPa or more is applied to the mold cloth for treatment, the irregularities on the surface of the mold cloth can be crushed and flattened. The pressure to be applied is preferably 0.5 MPa or more, more preferably 0.6 MPa or more, still more preferably 1.0 MPa or more, even more preferably 2.5 MPa or more, particularly preferably 3.5 MPa or more, and most preferably 4.5 MPa or more. In addition, since the flattening effect is in balance even when the pressure is increased, the pressure is preferably 30 MPa or less, more preferably 20 MPa or less, and still more preferably 10 MPa or less, from the viewpoint of protecting the mold cloth. That is, the pressure to be applied to the mold cloth is preferably in the range of 0.3 MPa to 30 MPa.

The method of applying a pressure to the mold cloth is not particularly limited as long as the above pressure can be applied. Examples thereof include a method of roll pressing the mold cloth using a roller press machine, a method of pressing the mold cloth by sandwiching it between flat plates, a method of pinching the mold cloth using a roller press machine, and a method of punching the mold cloth. Among them, it is preferable to carry out either one of a roll press treatment or a flat plate press treatment, and from the viewpoint of production efficiency, a roll press treatment which allows a continuous treatment is preferred.

In the present embodiment, in the case of applying a pressure to the mold cloth, a pressure-resistant auxiliary plate having a pressure resistance of 200 MPa or more is preferably stacked on at least one surface of a first surface and a second surface of the mold cloth, which are opposite surfaces each other, and a pressure is preferably applied via the pressure-resistant auxiliary plate. When a pressure is applied via the pressure-resistant auxiliary plate, the mold cloth can be pressed evenly and flattened more efficiently.

Examples of the pressure-resistant auxiliary plate include an iron plate, a steel plate, and a titanium plate. It is preferable to use at least one selected from the group consisting of these. Among them, an iron plate and a steel plate are more preferred from the viewpoint of pressure resistance, and a steel plate is still more preferred from the viewpoint of excellent rust resistance.

The pressure-resistant auxiliary plate preferably has a thickness in the range of 4 mm to 10 mm. When the thickness of the pressure-resistant auxiliary plate is 4 mm or more, deformation of the pressure-resistant auxiliary plate can be prevented, and when the thickness is 10 mm or less, work efficiency is improved. The thickness of the pressure-resistant auxiliary plate is more preferably 5 mm or more, still more preferably 6 mm or more, and is more preferably 9 mm or less, still more preferably 8 mm or less.

The number of times of applying a pressure and the time for which a pressure is applied may be appropriately adjusted to achieve a desired surface state.

The flattened mold cloth produced by the production method according to the present embodiment preferably has a maximum height difference Rz of 0.30 (1/m) or less on the surface of the mold cloth when measured by the following measurement method.

### [Measurement of Maximum Height Difference Rz]

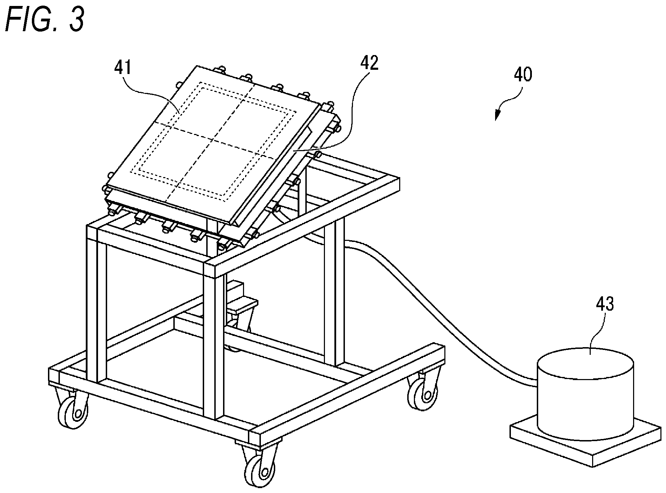

As shown in FIG. 3, an iron plate 42 having a size of 50 cm in length, 50 cm in width, and 1 cm in thickness and having a plurality of air suction holes around an outer peripheral portion and a central portion (20 cm × 20 cm) of the surface is stacked on a sample glass 41 formed to have a 4000R spherical surface with a size of 50 cm × 50 cm, following by setting on a vacuum generator 43 at an inclination angle of 25°, to prepare a small vacuum mold 40.

A mold cloth is adhered to the iron plate 42, then covered with a vinyl sheet (polyvinyl chloride (PVC)) having a thickness of 3 mm, followed by sucking with the vacuum generator 43 to obtain a stacked body having a curved surface.

Using a 3D measurement system called "SCREENSCAN-Reflected Distortion" manufactured by ISRA VISION GmbH, which is capable of measuring a curvature of a reflective surface in a non-contact manner, a reflected image of the vinyl sheet surface in the stacked body is obtained. The obtained reflected image is photographed with a camera to obtain a 1/R distribution image representing strength of the distortion. The distribution image is decomposed into 256 color difference gradations, and a difference in shade level is checked from a shade distribution in a region A of 400 cm² (20 cm × 20 cm) in a central portion of the image, and the maximum value of the difference in shade level (maximum shade difference) is determined as the maximum height difference Rz of the irregularities on the surface of the mold cloth. Hereinafter, this method for evaluating the irregularities on the surface of the mold cloth will be referred to as a "screen scan evaluation method".

More specifically, in the screen scan evaluation method, the stacked body of the mold cloth and the vinyl sheet being sucked by the vacuum generator 43 is set in a measurement MOLD "SCREENSCAN-Reflected Distortion" manufactured by ISRA VISION GmbH, a zebra image is projected onto the screen using a projector, and the reflected image is photographed using a camera set above. When the projected reflected image deviates from the original position, it represents "distortion". In this system, the reciprocal of a deviation distance, 1/R, is measured and a distribution image is generated, allowing the strength of the distortion to be recognized. Then, the obtained distribution image is decomposed into 256 color difference gradations, the difference in shade level is checked from the shade distribution in the region A of 400 cm² (20 cm × 20 cm) in the central portion of the image, and the maximum value of the difference in shade level (maximum shade difference) is determined.

As the vacuum generator 43, a known vacuum generator can be used, and the examples thereof include a vacuum cleaner, a vacuum pump, a suction machine, or the like.

The suction pressure of the vacuum generator 43 is not particularly limited as long as the vinyl sheet can be closely attached to the surface of the mold cloth, and it is preferable to perform the vacuuming at a vacuum pressure of -50 kPa to -5 kPa. When the vacuum pressure is -5 kPa or less, the vinyl sheet can be made to conform to the irregularities on the surface of the mold cloth. The vacuum pressure is more preferably -10 kPa or less, still more preferably -15 kPa or less, particularly preferably -25 kPa or less, and is more preferably -45 kPa or more, still more preferably -40 kPa or more, particularly preferably -35 kPa or more.

Since the vinyl sheet conforms to the surface shape of the mold cloth, the maximum height difference Rz measured by the screen scan evaluation method is approximately equal to the maximum height difference Rz of the surface of the mold cloth.

When the maximum height difference Rz of the surface of the mold cloth is 0.30 (1/m) or less, the irregularities on the surface is reduced, which reduces the transfer of the irregularities to the surface of the glass during bending and forming of the glass, thereby reducing the surface roughness of the glass molded article.

The maximum height difference Rz is more preferably 0.26 (1/m) or less, and still more preferably 0.24 (1/m) or less. The smaller the maximum height difference Rz, the smaller the roughness of the surface of the mold cloth. Therefore, there is no particular limitation on the lower limit value.

In addition, the flattened mold cloth produced by the production method according to the present embodiment preferably has an average roughness Ra of 80 µm or less on the surface of the mold cloth when measured by the following measurement method.

### [Measurement of Average Roughness Ra]

In the above [Measurement of Maximum Height Difference Rz], without using the sample glass 41, the vinyl sheet is closely attached to the mold cloth to obtain a stacked body having a flat shape, and the average roughness Ra of the surface of the mold cloth in a set region is measured using an optical microscope.

As the optical microscope, a commercially available device can be used. For example, a one-shot 3D measuring device "VR6000" manufactured by KEYENCE Corporation can be used, and the average roughness Ra of the surface of the mold cloth can be measured. With the one-shot 3D measuring device, when a striped light pattern is emitted onto the surface of a sample, the thickness and the shape of the stripes change depending on the shape of the material, so that this change is detected to measure the average roughness Ra of the surface of the mold cloth. Hereinafter, the method of evaluating the irregularities on the surface of the mold cloth using "VR6000" manufactured by KEYENCE Corporation will be referred to as a "pattern light projection evaluation method".

When the average roughness Ra of the surface of the mold cloth is 80 µm or less, the surface of the mold cloth can be evaluated as being flat. The average roughness Ra of the surface of the mold cloth is more preferably 70 µm or less, still more preferably 60 µm or less, and particularly preferably 50 µm or less. The smaller the average roughness Ra, the smaller the roughness of the surface of the mold cloth. Therefore, there is no particular limitation on the lower limit value.

When the flattened mold cloth thus obtained is used to produce a glass molded article, the transfer of the irregularities on the surface of the mold cloth to the glass plate is prevented. Therefore,the occurrence of the perspective distortion can be prevented, and a glass molded article having a more complex shape can be obtained.

The glass molded article obtained by the method according to the present embodiment has a small surface roughness, and therefore has small perspective distortion, and can reduce perspective distortion in a laminated glass, so that it is suitably used for a laminated glass application.

### EXAMPLES

Hereinafter, the present invention will be described with reference to Examples, but the present invention is not limited thereto. In the following description, common components employ the same substance. Unless otherwise specified, "part" and "%" represent "part by mass" and "mass%", respectively. Examples 1, 3, and 5 are Comparative Examples, and Examples 2, 4 and 6 to 8 are Working Examples.

The measurement methods used in each example are as follows.

### (Maximum Height Difference Rz of Surface of Mold Cloth)

The maximum height difference Rz of the surface of the mold cloth was measured by using the screen scan evaluation method.

As shown in FIG. 3, the iron plate 42 having a size of 50 cm in length, 50 cm in width, and 1 cm in thickness and having a plurality of air suction holes around the outer peripheral portion and the central portion (20 cm × 20 cm) of the surface was stacked on the sample glass 41 formed to have a 4000R spherical surface with a size of 50 cm × 50 cm , followed by setting on a vacuum cleaner (the vacuum generator 43) at an inclination angle of 25°, to prepare the small vacuum mold 40.

A mold cloth was adhered to the iron plate 42, then covered with a vinyl sheet (polyvinyl chloride (PVC)) having a thickness of 3 mm, followed by sucking with the vacuum cleaner under a pressure of about -35 kPa to obtain a stacked body having a curved surface.

The stacked body was set in a measurement MOLD "SCREENSCAN-Reflected Distortion" manufactured by ISRA VISION GmbH, a zebra image was projected onto the screen using a projector, and the reflected image was photographed using a camera set above, to obtain a 1/R distribution image representing the strength of the distortion. The obtained distribution image was decomposed into 256 color difference gradations, the difference in shade level was checked from the shade distribution in the region A of 400 cm² (20 cm × 20 cm) in the central portion of the image, and the maximum value of the difference in shade level (maximum shade difference) was determined.

### (Average Roughness Ra of Surface of Mold Cloth)

The average roughness Ra of the surface of the mold cloth was measured by using the pattern light projection evaluation method.

The small vacuum mold 40 having the configuration shown in FIG. 3 was used, but no sample glass 41 was used. A stacked body having a flat shape in which the vinyl sheet was closely attached to the mold cloth was prepared, and the average roughness Ra of the surface of the mold cloth was measured using a one-shot 3D measuring device "VR6000" manufactured by KEYENCE Corporation.

### (Maximum Perspective Distortion Value MAX of Glass Molded Article)

An image was taken under conditions of an attachment angle of 30 degrees with Filter 4.5.0 using "LABSCAN" manufactured by ISRA VISION GmbH, and the maximum perspective distortion value in the central portion of the image was measured.

### <Test Example 1: Example 1 to Example 4>

### (Example 1)

A commercially available mold cloth A was used. The mold cloth A had a maximum height difference Rz of 0.502 (1/m) on the surface.

Using the mold cloth A and the production device shown in FIG. 1, a glass plate (soda lime glass) was heated to 640°C to 660°C and bent to obtain a spherical glass having a curvature radius of 4000 mm.

### (Example 2)

The mold cloth A in Example 1 was set on a roller press machine, a pressure-resistant auxiliary plate (SUS304, thickness: 4 mm) was placed on the mold cloth, and a pressure of 0.6 MPa was applied from above the pressure-resistant auxiliary plate, with the roller moving back and forth three times to press the mold cloth, thereby obtaining a flattened mold cloth. The flattened mold cloth had a maximum height difference Rz of 0.325 (1/m) on the surface.

Using the obtained flattened mold cloth, a glass molded article was prepared in the same manner as in Example 1.

### (Example 3)

A commercially available mold cloth B was used. The mold cloth B had a maximum height difference Rz of 0.439 (1/m) on the surface.

Using the mold cloth B, a glass molded article was prepared in the same manner as in Example 1.

### (Example 4)

The mold cloth B in Example 3 was subjected to a press treatment in the same manner as in Example 2 to obtain a flattened mold cloth. The flattened mold cloth had a maximum height difference Rz of 0.298 (1/m) on the surface.

Using the obtained flattened mold cloth, a glass molded article was prepared in the same manner as in Example 1.

### The glass molded articles in Example 1 to Example 4 were each laminated to form a laminated glass, and the maximum perspective distortion value MAX was measured.

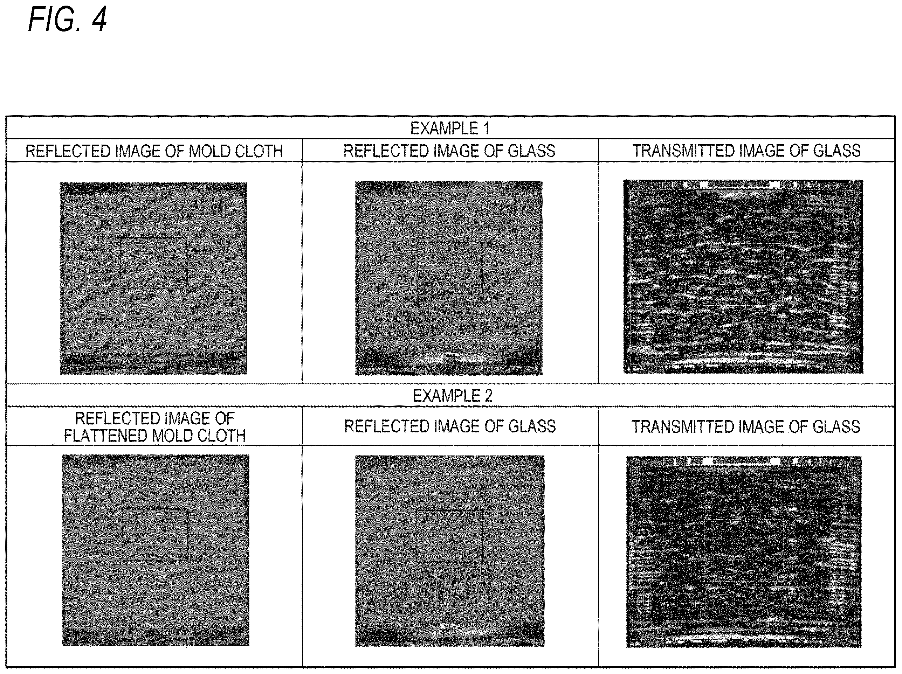

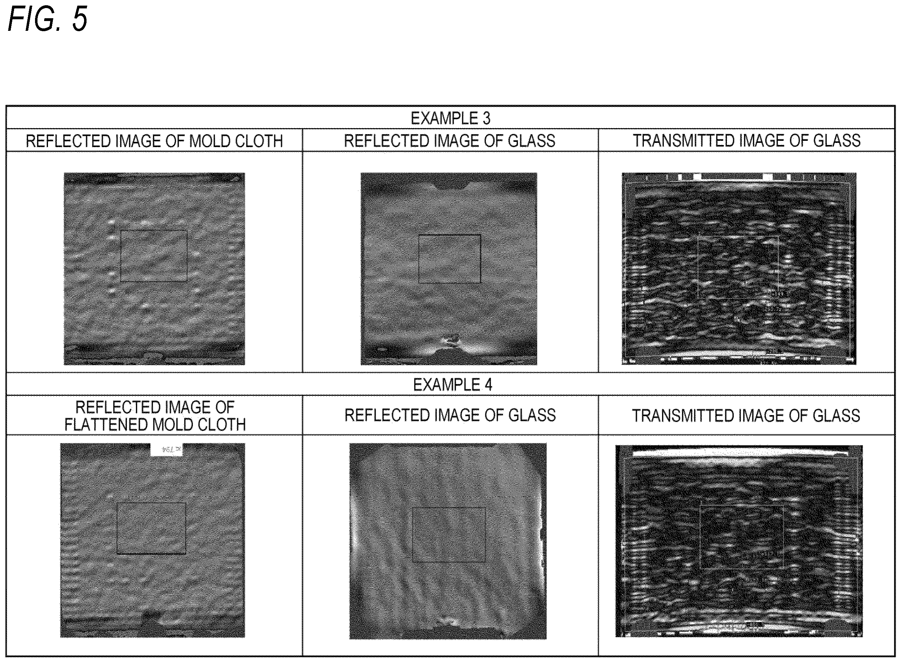

Results are shown in Table 1 and FIGS. 4 and 5.

**[Table 1]**

| | | Unit | Example 1 | Example 2 | Example 3 | Example 4 |
|---|---|---|---|---|---|---|
| Mold cloth | Type of cloth | - | Cloth A | Cloth A | Cloth B | Cloth B |
| | Presence or absence of flattening (roller press: 0.6 MPa) | - | Absence | Presence | Absence | Presence |
| | Maximum height difference Rz using screen scan evaluation method | 1/m | 0.502 | 0.325 | 0.439 | 0.298 |
| Glass molded article | Maximum perspective distortion value MAX | mdpt | 167 | 103 | 149 | 118 |

As seen from Table 1 and FIGS. 4 and 5, when comparing Example 1 and Example 2, the flattened mold cloth prepared in Example 2 had smaller irregularities on the surface of the mold cloth than the mold cloth used in Example 1, and when this flattened mold cloth was used to prepare a glass molded article, the irregularities on the surface of the glass molded article were reduced, the maximum perspective distortion value MAX was 120 mdpt or less, and a glass molded article having reduced perspective distortion was obtained. Similarly, when comparing Example 3 and Example 4, Example 4 had smaller irregularities on the surface of the glass molded article than that in Example 3, and a glass molded article having reduced perspective distortion was obtained. Accordingly, it is known that the perspective distortion of the glass molded article can be reduced by flattening the mold cloth used.

### <Test Example 2: Example 5 to Example 8>

### (Example 5)

A commercially available mold cloth A was used. The mold cloth A had a maximum height difference Rz of 0.502 (1/m) on the surface. In addition, the mold cloth A had an average roughness Ra of 92.3 (µm) on the surface.

Using the mold cloth A and the production device shown in FIG. 1, a glass plate (soda lime glass) was heated to 640°C to 660°C and bent to obtain a spherical glass having a curvature radius of 4000 mm.

Note that, Example 5 is the same as Example 1.

### (Example 6)

The mold cloth A in Example 1 was set on a cylinder press machine, a pressure-resistant auxiliary plate (SUS304, thickness: 4 mm) was placed on the mold cloth, and a pressure of 2.5 MPa was applied from above the pressure-resistant auxiliary plate to press the mold cloth, thereby obtaining a flattened mold cloth. The flattened mold cloth had a maximum height difference Rz of 0.286 (1/m) and an average roughness Ra of 72.6 (µm) on the surface.

Using the obtained flattened mold cloth, a glass molded article was prepared in the same manner as in Example 5.

### (Example 7)

The same procedure as in Example 6 was performed except that pressing was performed at a pressure of 4.75 MPa.

The flattened mold cloth prepared in Example 7 had a maximum height difference Rz of 0.243 (1/m) and an average roughness Ra of 69.0 (µm) on the surface.

Using the obtained flattened mold cloth, a glass molded article was prepared in the same manner as in Example 5.

### (Example 8)

The same procedure as in Example 6 was performed except that pressing was performed at a pressure of 7 MPa.

The flattened mold cloth prepared in Example 8 had a maximum height difference Rz of 0.231 (1/m) and an average roughness Ra of 58.8 (µm) on the surface.

Using the obtained flattened mold cloth, a glass molded article was prepared in the same manner as in Example 5.

The glass molded articles in Example 5 to Example 8 were each laminated to form a laminated glass, and the maximum perspective distortion value MAX was measured.

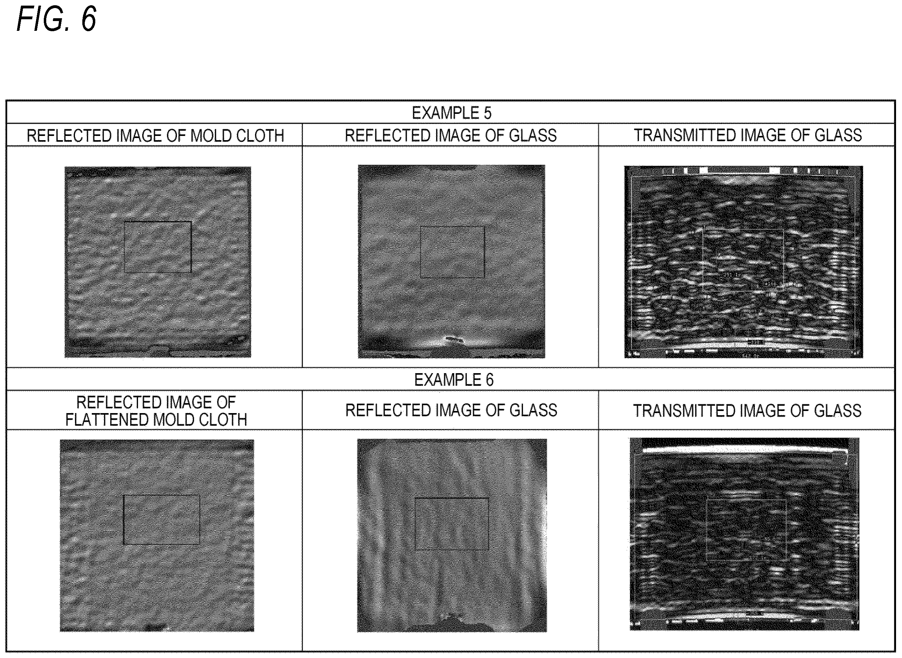

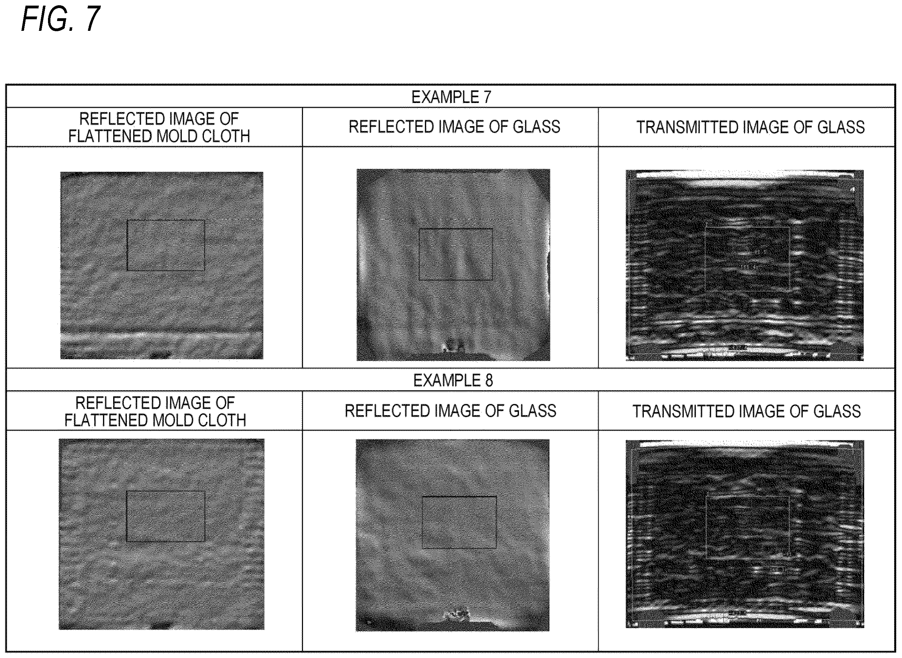

Results are shown in Table 2 and FIGS. 6 and 7.

**[Table 2]**

| | | Unit | Example 5 | Example 6 | Example 7 | Example 8 |
|---|---|---|---|---|---|---|
| Mold cloth | Type of cloth | - | Cloth A | Cloth A | Cloth A | Cloth A |
| | Presence or absence of flattening (cylinder press) | - | Absence | Presence | Presence | Presence |
| | Cylinder press pressure | MPa | - | 2.5 | 4.75 | 7.0 |
| | Maximum height difference Rz using screen scan evaluation method | 1/m | 0.502 | 0.286 | 0.243 | 0.231 |
| | Average roughness Ra using pattern light projection evaluation method | µm | 92.3 | 72.6 | 69.0 | 58.8 |
| Glass molded article | Maximum perspective distortion value MAX | mdpt | 167 | 90 | 82 | 91 |

As seen from Table 2 and FIGS. 6 and 7, the flattened mold cloths obtained in Examples 6 to 8 had smaller irregularities on the surface than that in the mold cloth used in Example 5, and a glass molded article prepared using this flattened mold cloth had reduced irregularities on the surface and a small maximum perspective distortion value MAX. Note that, since there was no large change in maximum perspective distortion value MAX even when the pressing pressure was increased, it is thought that the reduction in surface roughness reaches a balance.

As described above, the following matters are disclosed in the present description.
<1> A method for producing a glass molded article, the method including:
   attaching a flattened mold cloth, which is obtained by reducing irregularities on a surface of a mold cloth, to a forming mold;
   heating a glass plate to a temperature equal to or higher than a glass transition point; and
   press-forming the softened glass plate into a predetermined shape along the forming mold via the flattened mold cloth.
<2> The method for producing a glass molded article according to the above <1>, in which a pressure of 0.3 MPa or more is applied to the surface of the mold cloth to obtain the flattened mold cloth.
<3> The method for producing a glass molded article according to the above <1> or <2>, in which the glass molded article to be obtained has a maximum perspective distortion value of 120 mdpt or less when measured using a distortion inspection device LABSCAN manufactured by ISRA VISION GmbH under conditions of an attachment angle of 30 degrees with Filter 4.5.0.
<4> The method for producing a glass molded article according to any one of the above <1> to <3>, which is a method for producing a glass molded article for a laminated glass.
<5> A method for producing a flattened mold cloth, the method including:
   applying a pressure of 0.3 MPa or more to a surface of a mold cloth to reduce irregularities on a surface of the mold cloth.
<6> The method for producing a flattened mold cloth according to the above <5>, in which a pressure-resistant auxiliary plate having a pressure resistance of 200 MPa or more is stacked on at least one surface of a first surface and a second surface of the mold cloth, which are opposite surfaces each other, and a pressure is applied via the pressure-resistant auxiliary plate.
<7> The method for producing a flattened mold cloth according to the above <6>, in which the pressure-resistant auxiliary plate is at least one metal plate selected from the group consisting of an iron plate, a steel plate, and a titanium plate.
<8> The method for producing a flattened mold cloth according to any one the above <5> to <7>, in which the mold cloth is subjected to one of a roll press treatment or a flat plate press treatment.

The present application is based on Japanese Patent Application No. 2023-223474 filed on December 28, 2023, and the contents thereof are incorporated herein by reference.

### REFERENCE SIGNS LIST

10 production device
12 glass plate
20 transport conveyor
24 female mold
26 rail
28 controller
30 male mold
32 transport shuttle
34 base
36 cooling mold
38 cooling device
39 carrying-out shuttle
40 vacuum mold
41 sample glass
42 iron plate
43 vacuum generator

## Claims

1. A method for producing a glass molded article, the method comprising:
attaching a flattened mold cloth, which is obtained by reducing irregularities on a surface of a mold cloth, to a forming mold;
heating a glass plate to a temperature equal to or higher than a glass transition point; and
press-forming the softened glass plate into a predetermined shape along the forming mold via the flattened mold cloth.

2. The method for producing a glass molded article according to claim 1, wherein a pressure of 0.3 MPa or more is applied to the surface of the mold cloth to obtain the flattened mold cloth.

3. The method for producing a glass molded article according to claim 1 or 2, wherein the glass molded article to be obtained has a maximum perspective distortion value of 120 mdpt or less when measured using a distortion inspection device LAB SCAN manufactured by ISRA VISION GmbH under conditions of an attachment angle of 30 degrees with Filter 4.5.0.

4. The method for producing a glass molded article according to any one of claims 1 to 3, which is a method for producing a glass molded article for a laminated glass.

5. The method for producing a glass molded article according to claim 1, the method comprising:
applying a pressure of 0.3 MPa or more to a surface of the mold cloth to reduce irregularities on a surface of the mold cloth.

6. The method for producing a glass molded article according to claim 5, wherein a pressure-resistant auxiliary plate having a pressure resistance of 200 MPa or more is stacked on at least one surface of a first surface and a second surface of the mold cloth, which are opposite faces each other, and a pressure is applied via the pressure-resistant auxiliary plate.

7. The method for producing a glass molded article according to claim 6, wherein the pressure-resistant auxiliary plate is at least one metal plate selected from the group consisting of an iron plate, a steel plate, and a titanium plate.

8. The method for producing a glass molded article according to any one of claims 5 to 7, wherein the mold cloth is subjected to one of a roll press treatment or a flat plate press treatment.
